# EUROPÄISCHE PATENTSCHRIFT

(11) **EP 1 658 247 B1**
(45) Veröffentlichungstag und Bekanntmachung des Hinweises auf die Patenterteilung: **21.02.2007**
(21) Anmeldenummer: 04763541.2
(22) Anmeldetag: 28.07.2004
(51) Int. Cl.: C04B 20/10, C04B 22/06, C04B 14/06

(54) **VERFAHREN ZUR HERSTELLUNG EINER FARBSANDZUSAMMENSETZUNG UND DEREN ZUSAMMENSETZUNG**
METHOD FOR THE PRODUCTION OF A COLOR SAND COMPOSITION, AND COMPOSITION THEREOF
PROCEDE POUR PRODUIRE UNE COMPOSITION DE SABLE COLOREE ET COMPOSITION DE CETTE DERNIERE

(30) Priorität: 01.08.2003 DE 10335427
(43) Veröffentlichungstag der Anmeldung: 24.05.2006
(73) Patentinhaber: Bene-fit GmbH, 92242 Hirschau (DE)
(72) Erfinder: KRÄUTER, Reinhard, 92237 Sulzbach-Rosenberg (DE); FLIERL, Michael, 92242 Hirschau (DE)
(74) Vertreter: Hannke, Christian
(86) Internationale Anmeldenummer: PCT/EP2004/008412
(87) Internationale Veröffentlichungsnummer: WO 2005/012204

(56) Entgegenhaltungen:
- DE-A1- 4 018 619
- US-A- 2 001 448
- US-A- 3 208 871

## Beschreibung

Die Erfindung betrifft ein Verfahren zur Herstellung einer Farbsandzusammensetzung und deren Zusammensetzung gemäß den Oberbegriffen der Patentansprüche 1 und 8.

Farbsandzusammensetzungen, die eine Vielzahl von Quarzsandkörnern mit außenseitigen Beschichtungen aus Farbpigmenten beinhalten, sind beispielsweise aus der DE 38 26 877 A1 und aus der US 3 208 871 A bekannt. Derartige Farbsande weisen üblicherweise Quarzsandkörner auf, welche außenseitig mit Farbpigmenten beschichtet sind. Die Farbpigmente können mittels Alkalisilikate - auch Wassergläser genannt - und eines Brennvorganges dauerhafter mit den Quarzsandkörnern verbunden werden. Bei einem derartigen Brennvorgang, der zu einer Kalzinierung des Quarzes führt, kommt es zu einer chemischen Bindung zwischen wasserlöslichen glasartigen Feststoffen, die ein ausgewähltes Wasserglas darstellen, und den Quarzsandkörnern.

Es hat sich herausgestellt, dass derartige chemische Bindungen nicht dauerhaft sind, das heißt Wasserglasanteile lösen sich im Laufe der Zeit wieder von den Quarzsandkörnern insbesondere bei Kontaktierung mit Wasser. Dies hat unter anderem die Ablösung von Farbpigmenten von der Oberfläche der Quarzsandkörner zur Folge. Insbesondere wird aufgrund der Ablösung der Wasserglasanteile eine pH-Wert-Erhöhung innerhalb der Farbsandzusammensetzung erhalten, welche bei einer weiteren Verarbeitung des farbigen Quarzsandes unerwünscht ist.

Um ein derartiges teilweises Auf- und/oder Ablösen der Wasserglasschicht von den Quarzsandkörnern zu vermeiden, ist man dazu übergegangen, die Brenntemperatur zu erhöhen. Derartig hergestellte Wasserglasschichten weisen eine deutlich verbesserte Haftung und eine geringere Löslichkeit in Bezug auf Wasser auf. Sie reagieren mit Wasser deutlich weniger stark alkalisch. Allerdings erfordert ein derartiges Verfahren einen erhöhten Energieaufwand. Zudem sind bei derartig hohen Temperaturen die eingesetzten Farbpigmente zumindestens teilweise nicht mehr farbstabil, weshalb es zu unerwünschten Farbverschiebungen kommt.

Demzufolge liegt der vorliegenden Erfindung die Aufgabe zugrunde, ein Verfahren zur Herstellung einer Farbsandzusammensetzung und deren Zusammensetzung zur Verfügung zu stellen, mit dem eine dauerhaftere Haftung der Wasserglasschichten und der Farbpigmente an der Oberfläche der Quarzsandkörner sowie eine verbesserte pH-Wert-Stabilität der Farbsandzusammensetzung erreicht wird.

Diese Aufgabe wird verfahrensseitig durch die Merkmale des Patentanspruches 1 und stoffseitig durch die Merkmale des Patentanspruches 8 gelöst.

Ein wesentlicher Punkt der Erfindung liegt darin, dass bei einem Verfahren zur Herstellung einer Farbsandzusammensetzung, enthaltend eine Vielzahl von Quarzsandkörnern mit außenseitigen Beschichtungen aus Farbpigmenten, folgende Schritte durchgeführt werden:
- Vermischen von Natronlauge und Wasser in einem vorbestimmten Verhältnis, vorzugsweise von 1:2 zu einer verdünnten Natronlauge;
- Vermischen von Borsäure in einer vorbestimmten Konzentration mit der verdünnten Natronlauge zu einer Borsäure-Natronlauge-Lösung;
- Vermischen eines Bindemittels, insbesondere Natronwasserglas, mit der Borsäure-Natronlauge-Lösung in einem vorbestimmten Verhältnis zu einer Beschichtungsmischung;
- Beschichten der mit den Farbpigmenten beschichteten Quarzkömer mit der Beschichtungsmischung durch hinzugeben der Beschichtungsmischung zu den Quarzsandkörnern, und
- Indirekte Erwärmung der mit der Beschichtungsmischung beschichteten Quarzsandkörner in einem gegenüber der Erwärmungsquelle räumlich abgeschlossenen System mittels getrennter Kammern für den Erwärmungsvorgang und die Erwärmungsquelle.

Durch die zusätzliche Verwendung von Borsäure mit einer Konzentration von mehr als 99,9 Ma%H₃BO₃ ist eine sich in Wasser schlecht lösende Mischungskomponente der Beschichtungsmischung eingesetzt. Eine derartige technische Bosäure löst sich hingegen in der verdünnten Natronlauge sehr gut. Bei einer entsprechenden Dosierung der der verdünnten Natronlauge hinzugegebenen Borsäuremenge in einem unterstöchiometrischen Verhältnis ist eine vorbestimmbare nur teilweise stattfindende Neutralisation der Borsäure aufgrund einer stattfindenden Sättigung erreichbar. Beispielsweise liegt die Borsäurekonzentration in einem Bereich, bei dem pro Borsäuremolekül 1 bis 2 ungebundene Protonen nach Hinzumischung der Borsäure zu der verdünnten Natronlauge übrig bleiben, die bei der späteren Hinzufügung von Wasserglas als Bindemittel Natriumionen desjenigen binden können. Dies hat eine dauerhaftere Bindung des Wasserglases an die Quarzsandkörner zur Folge.

Die spätere Bindung von aus dem Wasserglas hervorgehenden Natriumionen mit den 1 bis 2 ungebundenen Protonen der Borsäuremoleküle wird entscheidend durch die indirekte, also passive Erwärmung der mit der Beschichtungsmischung beschichteten Quarzsandkörner in einem gegenüber der Erwärmungsquelle räumlich abgeschlossenen System mittels getrennter Kammern gefördert. Denn aufgrund der getrennten Anordnung von Kammern für den Erwärmungsvorgang und die Erwärmungsquelle wird ein direktes Kontaktieren von Brenngasen mit der zu brennenden erfindungsgemäßen Farbsandzusammensetzung vermieden, welches eine Kontaktierung von CO₂-Gasen mit Natriumionen der Farbsandzusammensetzung unterbindet. Auf diese Weise wird vorteilhaft die Bildung von Na₂CO₃-Molekülen innerhalb einer Brennkammer, wie es bisher bekannt war, und die dadurch bedingte zwangsläufige Erhöhung der pH-Werte der Farbzusammensetzung unterdrückt.

Vorzugsweise wird eine derartige indirekte Erwärmung, wie sie beispielsweise mittels eines passiv beheizten Muffelofens oder eines passiv beheizten Elektrodrehrohrofens durchgeführt werden kann, bei einer Temperatur aus einem Temperaturbereich von 300° - 900°C, vorzugsweise bei einer Temperatur von ca. 400°C durchgeführt. Idealerweise ist das gegenüber der Erwärmungsquelle abgeschlossene System derart ausgebildet, dass keine durch den Erwärmungsvorgang hervorgerufenen Fremdgase, also Gase, die nicht der Farbsandzusammensetzung zuzuordnen sind, mit der zu brennenden Farbsandzusammensetzung in Kontakt kommen.

Gemäß einer bevorzugten Ausführungsform wird in dem Schritt des Mischens von Natronlauge mit Wasser die Natronlauge in das Wasser eingerührt und darin gelöst. Dies führt zu einer optimierten Vermischung von Natronlauge und Wasser.

Der Schritt des Vermischens der Borsäure mit der verdünnten Natronlauge wird erst nach Ablauf einer Abkühlungszeitspanne, in welcher die durch den vorangegangenen Vermischungsschritt stark erwärmte verdünnte Natronlauge abgekühlt wird, durchgeführt.

Die Borsäure-Natronlauge-Lösung weist einen Borsäure-Gehalt von 35,7 Ma% und eine Dichte von 1,4-1,6 g/cm³ auf.

Das Verhältnis von Borsäure-Natronlauge-Lösung zu Natronwasserglas liegt gemäß einer bevorzugten Ausführungsform in einem Bereich von 1:2 -1:6, vorzugsweise jedoch bei 1:3,6.

Eine erfindungsgemäße Farbsandzusammensetzung mit einer Vielzahl von Quarzsandkörnern mit außenseitigen Beschichtungen aus Farbpigmenten enthält vorteilhaft auf den Quarzsandkörnern eingebrannte Oberflächenschichten aus einer Beschichtungsmischung, die Natronlauge und Wasser in einem vorbestimmten Verhältnis, Borsäure in einer vorbestimmten Konzentration sowie Natronwasserglas enthält. Das Verhältnis zwischen Natronlauge und Wasser ist aus einem Bereich von 1:1 -1:5, vorzugsweise 1:2 und führt zu einer verdünnten Natronlauge. Die Borsäure ist wiederum mit der verdünnten Natronlauge in einem Verhältnis aus einem Bereich von 1:1 -1:5, vorzugsweise 1:1,8 zu einer Borsäure-Natronlauge-Lösung vermischt. Die Borsäure-Natronlauge-Lösung ist wiederum mit dem Natronwasserglas in einem Verhältnis aus einem Bereich von 1:1 - 1:6, vorzugsweise 1:3,6 zur Beschichtungsmischung vermischt. Derartige Vermischungsverhältnisse führen vorteilhaft zu einer Farbsandzusammensetzung, die selbst nach einem Brennvorgang einen stabil gehaltenen pH-Wert aufweist und die kein nachträgliches Ablösen von Wasserglasteilen bei Kontakt mit Wasser von den Quarzsandkörnern erfährt.

Es hat sich als zweckmäßig herausgestellt, dass das Natronwasserglas einen SiO₂-Gehalt von 27,3 Ma%, einen Na₂O-Gehalt von 8,2 Ma% und einen H₂O-Gehalt von 64,5 Ma% aufweist.

Nachfolgend werden Ausführungsbeispiele der Erfindung anhand von den in Tabellen dargestellten Versuchsreihenergebnissen beschrieben:

Es wird 150 g technischer Natronlauge (NaOH) unter Rühren in einem Wasserbad in 300 g Wasser gelöst. Nach dem Abkühlen der sich stark erwärmenden Mischung wird in dieser verdünnten Natronlauge 250 g technische Borsäure mit einem Säuregehalt von 99,9 Ma% H₃BO₃ gelöst. Die dadurch entstandene Borsäure-Natronlauge-Lösung weist einen Massenanteil von 35,7 Ma% Borsäure und eine Dichte von 1,496 g/cm³ auf.

Anschließend wird die Borsäure-Natronlauge-Lösung mit dem Bindemittel Natronwasserglas bei Raumtemperatur vermischt. Das Natronwasserglas weist ein Verhältnis von SiO₂ zu Na₂O von 3,3:1 auf und besteht aus 8,2 Ma% Na₂O, 27,3 Ma% SiO₂ und 64,5 Ma% H₂O.

Zur Herstellung farbigen Quarzsandes wird dieser als Quarzsandkörner zunächst trocken mit Farbpigmenten vermischt. Es können auch Mischungen aus verschiedenen Farbpigmenten benutzt werden. Eine derartige Mischung findet in einem Labormischer mittels einer Homogenisierung der Masse statt. Anschließend wird pro 1 kg Quarzsandkörner eine Beschichtungsmischung aus 18 g Natronwasserglas und 5,0 g Borsäure-Natronlauge-Lösung zu dem Quarzsand mittels des Labormischers, in welchem das Gemisch für ca. 2 Minuten gerührt wird, hinzugefügt.

Eine sich anschließende indirekte Erwärmung bei mindestens 450°C in einem passiv beheizten Muffelofen erzeugt eine Kalzinierung der Quarzsandkörner mittels der Beschichtungsmischung, die zu einer hohen pH-Stabilität der Farbsandzusammensetzung über einen langen Zeitraum hinweg führt.

Der nachfolgenden Tabelle 1 sind insgesamt 6 Farbsandzusammensetzungen mit jeweils 1,8 Ma% hinzugefügtem Natronwasserglas und unterschiedlichen Borsäurekonzentrationen dargestellt.

**Tabelle 1:**

| **Probennr.** | **Wsgl./ kg QS** | **H₃BO₃-Lsg.** | **Kochtest** | **pHsof.** | **pH7d** | **pH28d** | **Temp.** |
|---|---|---|---|---|---|---|---|
| 1 | 1,8 % | 0,1 % | gut | 7,5 | 7,9 | 9,7 | 450°C |
| 2 | 1,8 % | 0,25% | gut | 6,7 | 7,6 | 9,2 | 450°C |
| 3 | 1,8 % | 0,50 % | mittel | 6,8 | 7,5 | 8,8 | 450°C |
| 4 | 1,0 % | 1,00 % | mittel | 7,3 | 6,8 | 7,8 | 450°C |
| 5 | 1,8 % | 1,50 % | mittel | 8,6 | ― | 8,7 | 450°C |
| 6 | 1,8 % | 2,00 % | schlecht | 9,2 | ― | 9,2 | 450°C |

Der Tabelle 1 ist deutlich zu entnehmen, dass sowohl ein zu geringer, als auch ein zu hoher Borsäure-Anteil zu geringerer pH-Wert-Stabilität der gesamten Farbsandzusammensetzung führt. Dies geht deutlich aus einem Vergleich der drei Spalten für den pH-Wert zum Zeitpunkt der Vermischung (und unmittelbar anschließender Kalzinierung: pHsof.), nach 7 Tagen ab dem Zeitpunkt der Vermischung (und unmittelbar anschließender Kalzinierung: pH7d) und nach 28 Tagen (pH28d) ab dem Vermischungszeitpunkt mit unmittelbar anschließender Kalzinierung hervor.

Tabelle 2 zeigt ebenso wie Tabelle 1 verschiedene Farbsandzusammensetzungsproben mit unterschiedlichen Borsäure-Gehältern und jeweils einem Wasserglasanteil von 1,8 Ma%. Der pH-Wert der Farbsandzusammensetzungsprobe V3 lag nach 28 Tagen bei einem vergleichsweise niedrigen Wert von 7,1 und ist über einen weiteren Zeitraum von 90, 360 und 840 Tage beobachtet worden. Hierbei ergab sich ein pH-Wert von 8,1 nach 90 Tagen, 9,0 nach 360 Tagen und 8,1 nach 840 Tagen. Dieses Ergebnis zeigt deutlich eine erhöhte pH-Stabilität gegenüber Proben ohne Borsäure-Lösung oder mit einem anderen Borsäure-Gehalt.

**Tabelle 2:**

| **Probenbez.** | **H₃BO₃-Lsg.** | **Kochtest** | **pHsof.** | **pH7d** | **pH28d** | **Wasserglas /kg QS** |
|---|---|---|---|---|---|---|
| ziegelrot 5/8 V 1 | 0,10 % | mittel | 8,4 | 9,9 | 9,6 | 1,8 % |
| ziegelrot 518 V 2 | 0,20 % | mittel | 7,2 | 8,1 | 9,2 | 1,8 % |
| ziegelrot 5/8 V 3 | 0,30 % | gut | 7,3 | 7,5 | 7,1 | 1,8 % |
| ziegelrot 5/8 V 4 | 0,40 % | schlecht | 7,6 | 8,9 | 8,5 | 1,8 % |

Der nachfolgenden Tabelle 3 ist bei einer vergleichenden Gegenüberstellung der pH-Werte für einen Zeitraum von 0, 6 und 30 Tagen zu entnehmen, dass eine erhöhte pH-Wert-Stabilität bei den Proben V4 und V5 vorliegt.

**Tabelle 3:**

| **Probenbez.** | **Wsgl. /kg QS** | **H₃BO₃-Lsg. (konzentr.)** | **Kochtest** | **pH sof.** | **pH6d** | **pH30d** |
|---|---|---|---|---|---|---|
| 17.08.00/V1 | 18g | 1,0g | s. gut-gut | 7,1 | 9,1 | 9,5 |
| 17.08.00/V2 | 18g | 2,0g | gut | 6,7 | 8,3 | 9,1 |
| 17.08.00/V3 | 18g | 3,0g | gut | 7,1 | 7,9 | 8,8 |
| 17.08.00/V4 | 18g | 4,0g | gut | 7,1 | 7,3 | 8,6 |
| 17.08.00/V5 | 18g | 5,0g | gut-mittel | 7,1 | 7,3 | 7,1 |

Für die Proben V4 und V5 ergaben weitere pH-Wert-Beobachtungen folgende Ergebnisse: Bei der Probe V4 lag ein pH-Wert von 8,0 nach 240 Tagen, 8,9 nach 360 Tagen und 6,1 nach 840 Tagen vor. Bei der Probe V5 lag ein pH-Wert von 7,6 nach 80 Tagen, 7,5 nach 240 Tagen, 8,5 nach 360 Tagen und 5,7 nach 840 Tagen vor. Demzufolge ist bei einer optimierten Abstimmung des Borsäure-Gehaltes, des Wasserglas-Gehaltes und der Brenntemperatur bei einem Brennvorgang innerhalb eines passiv beheizten Drehrohrofens oder eines Muffelofens eine pH-Wert-Stabilität über einen Zeitraum von mindestens 2 Jahren möglich.

In Tabelle 4 sind Farbsandzusammensetzungsproben gegenübergestellt, bei denen bei verschiedenen Borsäure-Gehältern von 2,0 g/kg und 4,0 g/kg verschiedene Brenntemperaturen von 450° - 510°C verwendet wurden. Eine sich anschließende pH-Wert-Beobachtung ergab, dass bei höheren Brenntemperaturen eine bessere pH-Wert-Stabilität erreicht werden kann. Zudem ist eine bessere Pigmenthaftung an der Oberfläche der Farbsandkörner vorhanden. Eine derartige bessere Pigmenthaftung wird zudem durch die Verwendung eines passiv beheizten Drehrohrofens unterstützt, der den Nebeneffekt einer schonenderen Pigmentierung zur Folge hat. Dies führt wiederum dazu, dass höhere Brenntemperaturen während des Brennvorganges verwendet werden können.

**Tabelle 4:**

| **Datum/Probenbez.** | **H₃BO₃-Lsg. (konzentr.)** | **Temperatur** | **Kochtest** | **pH 1d** | **pH 7d** | **pH30d** | **pH 110d** | **pH 260d** |
|---|---|---|---|---|---|---|---|---|
| 24.08.00/V1 | 2,0g/kg | 450° | mittel | 8,3 | 7,7 | 7,7 | 9,2 | |
| 24.08.00/V2 | 2,0g/kg | 480° | mittel | 7,4 | 7,6 | 8,1 | 9,2 | |
| 24.08.00/V3 | 2,0g/kg | 510° | gut | 7,0 | 7,0 | 7,2(50d) | 6,6 | |
| 24.08.00/V4 | 4,0g/kg | 450° | mittel | 7,3 | 7,1 | 7,3(50d) | 6,8 | 7,0 |
| 24.08.00/V5 | 4,0g/kg | 480° | mittel | 7,2 | 7,0 | 7,3(50d) | 6,6 | |
| 24.08.00/V6 | 4,0g/kg | 510° | gut | 7,0 | 6,8 | 6,6(50d) | 6,4 | |

Nachfolgender Tabelle 5 ist zu entnehmen, dass bei Farbsandzusammensetzungsproben mit unterschiedlichen Wasserglas-Lösungsanteilen, bei denen jeweils drei verschiedene Borsäure-Anteile von 2,0, 4,0 und 6,0 g angewendet wurden, unterschiedlich hohe pH-Werte erreicht werden können.

**Tabelle 5:**

| **Datum/Lösung Nr.** | **H₃BO₃-Lsg.** | **Kochtest** | **pHsof.** | **pH8d** | **pH30d** | **pH210d** |
|---|---|---|---|---|---|---|
| 16.10.00/Nr.6 | 2,0g | gut | 9 | 9,5 | ― | |
| | 4,0 | gut | 7,4 | 7,4 | 8,5 | 7,3 |
| | 6,0g | mittel | 8,4 | 8,6 | ― | |
| 16.10.00/Nr.7 | 2,0g | gut | 9,1 | 9,4 | ― | |
| | 4,0g | mittel | 8,7 | 8,8 | ― | |
| | 6,0g | gut | 7,6 | 8,6 | ― | |
| 16.10.00/Nr. 9 | 2,0g | gut | 9,2 | 8,9 | ― | 8,4 |
| | 4,0g | gut | 7,4 | 7,7 | 8,8 | 7,1 |
| | 6,0g | gut | 8,8 | 8,3 | 8,7 | 7,7 |
| 16.10.00/Nr.10 | 2,0g | gut | 9,5 | 9,3 | ― | |
| | 4,0g | gut | 8,9 | 8,2 | 9 | |
| | 6,0g | gut | 8,9 | 8,3 | 8,7 | |
| 16.10.00/Nr.12 | 2,0g | gut | 9 | 9,7 | ― | |
| | 4,0g | gut | 8,6 | 8,7 | ― | |
| | 6,0g | gut | 8,1 | 8,8 | ― | |
| 17.10.00/Nr.13 | 2,0g | gut | 9,4 | 9,6 | ― | |
| | 4,0g | gut | 8,4 | 9 | ― | |
| | 6,0g | gut | 7 | 8,4 | ― | |
| 17.10.00/Nr.14 | 2,0g | gut | 9,6 | 9,6 | ― | |
| | 4,0g | gut | 9,5 | 9,1 | ― | |
| | 6,0g | gut | 9,1 | 9,3 | ― | |

Der nachfolgenden Tabelle 6 ist die Abhängigkeit des pH-Wertes von der Art der verwendeten Pigmente, des Pigmentanteils, und der Brenntemperatur dargestellt.

**Tabelle 6:**

| **Datum/Probe** | **Pigment** | **t in °C** | **Kochtest** | **pH 12d** | **pH50d** |
|---|---|---|---|---|---|
| 08.02.01/ V 1 | 10g PK 3095 | 450 | mittel | 7,9 | 8,6 |
| 08.02.01/V 2 | 10g PK 3095 | 500 | mittel | 7,0 | 7,8 |
| 08.02.01/ V 3 | 10g PK 3095 | 550 | mittel | 6,8 | 6,7 |
| 08.02.01/ V 4 | 10g PK 3095 | 600 | mittel | 6,7 | 6,9 |
| 08.02.01/V 5 | 15g Bayf 303T | 450 | schlecht | 8,1 | 8,3 |
| 08.02.01/V 6 | 15g Bayf 303T | 500 | mittel | 6,9 | 7,1 |
| 08.02.01/V 7 | 15g Bayf 303T | 550 | gut | 6,5 | 7,0 |
| 08.02.01/V 8 | 15g Bayf 303T | 600 | gut | 6,6 | 7,0 |

Zusammengefaßt hat sich als Ergebnis der umfangreich durchgeführten Versuchsreihen als ideale Zusammensetzung ein Na-Wasserglasanteil von 18 g je 1 kg Quarzsandkörner und 5 g an Borsäure-Natronlauge-Lösung erwiesen. Hierbei weist die Borsäure-Natronlauge-Lösung 30 g H₂O, 15 g NaOH und 25 g H₃BO₃ mit einem Gesamtgewicht von 70 g auf.

Den nachfolgenden Tabellen 7, 8 und 9 ist zu entnehmen, dass in Abhängigkeit von der verwendeten Brenntemperatur unterschiedliche pH-Werte-Stabilitäten bei verschiedenen Wasserglas-Lösungsanteile und unterschiedlichen Bindemitteln, also anderen Bindemitteln als Natronwasserglas erzielt werden kann.

**Tabelle 7:**

| **Bezeichnung/ Datum** | **Bindemittel** | **Temperatur** | **Kochtest** | **pH-Wert** | **pH 30d** |
|---|---|---|---|---|---|
| Orange /9 12.02.03/V 4 | Beschichtungs-mischung | 500 °C | Gut | 6,4 | 6,1 |
| Orange /9 12.02.03/V5 | Beschichtungs-mischung | 650°C | Sehr gut | 6,0 | 6,1 |

**Tabelle 8:**

| **Datum/Bezeichnung** | **Bindemittel** | **Temp.** | **Kochtest** | **pH-Wert** |
|---|---|---|---|---|
| orangebr. 173/D, aus Prod.(=VO) | 2,0%Na-Wgias | 380° | Ganz schlecht | 9,9 |
| orangebr.173/D, 27.02.03/V1 | Beschichtungs-mischung | 400° | Deutlich besser | 6,9 |
| orangebr. 173/D, 27.02.03 / V2 | Beschichtungs-mischung | 500° | Gut | 6,1 |
| orangebr. 173/D, 27.02.03 / V3 | Beschichtungs-mischung | 600° | Sehr gut | 6,3 |

**Tabelle 9:**

| **Datum/Bezeichnung** | **Bindemittel** | **Temp.** | **Kochtest** | **pH-Wert** |
|---|---|---|---|---|
| rotorange 172/D, aus Prod. (=V0) | 2,0 % Na-Wglas | 380° | Schlecht | 9,8 |
| rotorange 172/D, 05.03.03, V 1 | Beschichtungs-mischung | 400° | Deutlich besser | 6,8 |
| rotorange 172/D, 05.03.03, V 2 | Beschichtungs-mischung | 500° | Gut | 6,5 |
| rotorange 172/D, 05.03.03, V 3 | Beschichtungs-mischung | 600° | Sehr gut | 5,9 |

Sowohl ein zu geringer als auch ein zu hoher Borsäureanteil kann zu einer geringeren pH-Wert-Stabilität führen, so dass in Abhängigkeit von den restlichen Parametern der optimale Borsäure-Anteil mittels zahlreicher Versuchsreihen ermittelt werden musste. Hierbei ergab sich die Abhängigkeit der erfindungsgemäßen Farbsandzusammensetzung von nachfolgenden Parametern:
- Borsäure-Lösungsanteil
- Natronlauge-Anteil zum Lösen der Borsäure
- Wassergehalt innerhalb der Borsäure-Natronlauge-Lösung
- Konzentration der Wasserglaslösung
- Stöchiometrisches Verhältnis SiO₂ und Alkalioxid im Wasserglas
- Art des Wasserglases (entweder Na₂O oder K₂O)
- Verhältnis von Borsäure-Natronlauge-Lösung zu Wasserglas-Anteil
- CO₂-Anteil innerhalb der Brennkammer
- Kaliziniertemperatur
- Verhältnis von Wasserglas-Anteil zu Quarzsandkorn-Anteil.

## Patentansprüche

1. Verfahren zur Herstellung einer Farbsandzusammensetzung enthaltend eine Vielzahl von Quarzsandkörnern mit außenseitigen Beschichtungen aus Farbpigmenten, enthaltend die folgende Schritte:
- Vermischen von Natronlauge und Wasser in einem vorbestimmten Verhältnis, vorzugsweise von 1:2 zu einer verdünnten Natronlauge;
- Vermischen von Borsäure in einer vorbestimmten Konzentration mit der verdünnten Natronlauge zu einer Borsäure-Natronlauge-Lösung;
- Vermischen eines Bindemittels, insbesondere Natronwasserglas, mit der Borsäure-Natronlauge-Lösung in einem vorbestimmten Verhältnis zu einer Beschichtungsmischung;
- Beschichten der mit den Farbpigmenten beschichteten Quarzsandkörner mit der Beschichtungsmischung durch hinzugeben der Beschichtungsmischung zu den Quarzsandkörnem, und **gekennzeichnet durch** eine
- Indirekte Erwärmung der mit der Beschichtungsmischung beschichteten Quarzsandkörner in einem gegenüber der Erwärmungsquelle räumlich abgeschlossenen System mittels getrennter Kammern für den Erwärmungsvorgang und die Erwärmungsquelle.

2. Verfahren nach Anspruch 1,
**dadurch gekennzeichnet,dass**
die indirekte Erwärmung der Quarzsandkörner ohne Hinzufügung von Gasen, insbesondere von CO₂-Gasen in die Kammer des Erwärmungsvorganges bei einer Temperatur aus einem Temperaturbereich von 300° - 900°C, vorzugsweise 450°C - 550°C durchgeführt wird.

3. Verfahren nach Anspruch 1 oder 2,
**dadurch gekennzeichnet, dass**
in dem Schritt des Vermischens von Natronlauge mit Wasser die Natronlauge in das Wasser eingerührt und darin gelöst wird.

4. Verfahren nach einem der vorangegangenen Ansprüche,
**dadurch gekennzeichnet, dass**
der Schritt des Vermischens der Borsäure mit der verdünnten Natronlauge erst nach Ablauf einer Abkühlungszeitspanne, in welcher die durch den vorangegangenen Vermischungsschritt stark erwärmte, verdünnte Natronlauge abgekühlt wird, durchgeführt wird.

5. Verfahren nach einem der vorangegangenen Ansprüche,
**dadurch gekennzeichnet,dass**
die Borsäure-Natronlauge-Lösung einen Borsäuregehalt von 35,7 Ma% und eine Dichte von 1,4 - 1,6 g/cm³ aufweist.

6. Verfahren nach einem der vorangegangenen Ansprüche,
**dadurch gekennzeichnet, dass**,
der Borsäuregehalt in der Borsäure-Natronlauge-Lösung derart bemessen wird, daß eine nur teilweise Neutralisation der Borsäure durch die verdünnte Natronlauge stattfindet und pro Borsäuremolekül 1 - 2 ungebundene Protonen entstehen.

7. Verfahren nach einem der vorangegangenen Ansprüche,
**dadurch gekennzeichnet,dass**
das Verhältnis von Borsäure-Natronlauge-Lösung zu Natronwasserglas in einem Bereich von 1:2 - 1:6, vorzugsweise 1:3,6 ist.

8. Farbsandzusammensetzung enthaltend eine Vielzahl von Quarzsandkörnern mit außenseitigen Beschichtungen aus Farbpigmenten,
**dadurch gekennzeichnet, dass**
die Quarzsandkörner eingebrannte Oberflächenschichten aus einer Beschichtungsmischung aufweisen, die Natronlauge und Wasser in einem vorbestimmten Verhältnis, Borsäure in einer vorbestimmten Konzentration sowie Natronwasserglas enthält.

9. Farbsandzusammensetzung nach Anspruch 8,
**dadurch gekennzeichnet,dass**
das Verhältnis von Natronlauge zu Wasser aus einem Bereich von 1:1 - 1:5 ausgewählt, vorzugsweise 1:2 ist, wobei die Natronlauge und das Wasser eine verdünnte Natronlauge bilden.

10. Farbsandzusammensetzung nach Anspruch 9,
**dadurch gekennzeichnet,dass**
die Borsäure mit der verdünnten Natronlauge in einem Verhältnis aus einem Bereich von 1:1 -1:5, vorzugsweise von 1:1,8 zu einer Borsäure-Natronlauge-Lösung vermischt sind.

11. Farbsandzusammensetzung nach Anspruch 10,
**dadurch gekennzeichnet, dass**
die Borsäure-Natronlauge-Lösung mit dem Natronwasserglas in einem Verhältnis aus einem Bereich von 1:1 - 1:6, vorzugsweise von 1:3,6 zur Beschichtungsmischung vermischt sind.

12. Farbsandzusammensetzung nach einem der Ansprüche 8 - 11,
**dadurch gekennzeichnet, dass**
das Natronwasserglas einen SiO₂-Gehalt von 27,3 Ma%, einen Na₂O-Gehalt von 8,2 Ma% und einen H₂O-Gehalt von 64,5 Ma% aufweist.

## Claims

1. Method for producing a coloured sand composition containing a large number of silica sand grains with outer coatings of colour pigments, containing
the following steps:
- mixing caustic soda and water in a predetermined ratio, preferably of 1:2, to form a dilute caustic soda;
- mixing boric acid in a predetermined concentration with the dilute caustic soda to form a boric acid/caustic soda solution;
- mixing a binder, in particular sodium water glass, with the boric acid/caustic soda solution in a predetermined ratio to form a coating mixture;
- coating the silica sand grains coated with the colour pigments with the coating mixture by adding the coating mixture to the silica sand grains, and
**characterized by** an
- indirectly heating the silica sand grains coated with the coating mixture in a system which is spatially sealed from the heating source by means of separate chambers for the heating process and the heating source.

2. Method according to Claim 1,
**characterized in that**
the indirect heating of the silica sand grains is carried out without adding gases, in particular CO₂ gases, in the chamber of the heating process at a temperature within a temperature range of 300°C - 900°C, preferably 450°C - 550°C.

3. Method according to Claim 1 or 2,
**characterized in that**,
in the step of mixing caustic soda with water, the caustic soda is stirred into the water and dissolved therein.

4. Method according to any of the preceding claims,
**characterized in that**
the step of mixing the boric acid with the dilute caustic soda is carried out only following the elapse of a cooling period in which the dilute caustic soda, which has been considerably heated by the previous mixing step, is cooled.

5. Method according to any of the preceding claims,
**characterized in that**
the boric acid/caustic soda solution has a boric acid content of 35.7% by mass and a density of 1.4 - 1.6 g/cm³.

6. Method according to any of the preceding claims,
**characterized in that**
the boric acid content in the boric acid/caustic soda solution is such that the boric acid is only partially neutralized by the dilute caustic soda and 1 - 2 free protons are produced per boric acid molecule.

7. Method according to any of the preceding claims,
**characterized in that**
the ratio of boric acid/caustic soda solution to sodium water glass is in a range from 1:2 - 1:6, and is preferably 1:3.6.

8. Coloured sand composition containing a large number of silica sand grains with outer coatings of colour pigments,
**characterized in that**
the surface layers baked onto the silica sand grains consist of a coating mixture which contains caustic soda and water in a predetermined ratio, boric acid in a predetermined concentration, and sodium water glass.

9. Coloured sand composition according to Claim 8,
**characterized in that**
the ratio of caustic soda to water is selected from a range of 1:1 - 1:5, and is preferably 1:2, wherein the caustic soda and the water form a dilute caustic soda.

10. Coloured sand composition according to Claim 9,
**characterized in that**
the boric acid is mixed with the dilute caustic soda in a ratio within a range of 1:1 - 1:5, preferably 1:1.8, to form a boric acid/caustic soda solution.

11. Coloured sand composition according to Claim 10,
**characterized in that**
the boric acid/caustic soda solution is mixed with the sodium water glass in a ratio within a range of 1:1 - 1:6, preferably 1:3.6, to form the coating mixture.

12. Coloured sand composition according to any of Claims 8 - 11,
**characterized in that**
the sodium water glass has a SiO₂ content of 27.3% by mass, a Na₂O content of 8.2% by mass and a H₂O content of 64.5% by mass.

## Revendications

1. Procédé pour la préparation d'une composition de sable coloré contenant une multiplicité de grains de sable quartzeux à enrobages externes à base de pigments colorés, comportant les étapes suivantes :
- mélange d'une solution d'hydroxyde de sodium et d'eau en un rapport préétabli, de préférence de 1:2, pour l'obtention d'une solution diluée d'hydroxyde de sodium ;
- mélange d'acide borique à une concentration préétablie avec la solution diluée d'hydroxyde de sodium, pour l'obtention d'une solution d'acide borique-solution d'hydroxyde de sodium ;
- mélange d'un liant, en particulier d'orthosilicate de sodium, avec la solution d'acide borique-solution d'hydroxyde de sodium, en un rapport préétabli, pour l'obtention d'un mélange d'enrobage ;
- enrobage des grains enrobés de pigment coloré avec le mélange d'enrobage, par addition du mélange d'enrobage aux grains de sable quartzeux, et **caractérisé par** un
- chauffage indirect des grains de sable quartzeux enrobés avec le mélange d'enrobage, dans un système spatialement clos vis-à-vis de la source de chauffage, au moyen de chambres séparées pour le processus de chauffage et la source de chauffage.

2. Procédé selon la revendication 1, **caractérisé en ce que** le chauffage indirect des grains de sable quartzeux est effectué sans addition de gaz, en particulier de gaz contenant du CO₂, dans la chambre du processus de chauffage, à une température choisie dans la plage de température de 300 à 900 °C, de préférence de 450 à 550 °C.

3. Procédé selon la revendication 1 ou 2, **caractérisé en ce que**, dans l'étape de mélange de la solution d'hydroxyde de sodium et d'eau, la solution d'hydroxyde de sodium est délayée dans l'eau et dissoute dans celle-ci.

4. Procédé selon l'une quelconque des revendications précédentes, **caractérisé en ce que** l'étape de mélange de l'acide borique avec la solution diluée d'hydroxyde de sodium n'est effectuée qu'après écoulement d'une période de refroidissement pendant laquelle est refroidie la solution diluée d'hydroxyde de sodium fortement chauffée au cours de l'étape précédente de mélange.

5. Procédé selon l'une quelconque des revendications précédentes, **caractérisé en ce que** la solution d'acide borique-solution d'hydroxyde de sodium a une teneur en acide borique de 35,7 % en masse et une densité de 1,4-1,6 g/cm³.

6. Procédé selon l'une quelconque des revendications précédentes, **caractérisé en ce que** la teneur en acide borique de la solution d'acide borique-solution d'hydroxyde de sodium est choisie de manière qu'ait lieu seulement une neutralisation partielle de l'acide borique par la solution diluée d'hydroxyde de sodium et qu'il en résulte 1-2 protons non liés par molécule d'acide borique.

7. Procédé selon l'une quelconque des revendications précédentes, **caractérisé en ce que** le rapport de la solution d'acide borique-hydroxyde de sodium à l'orthosilicate de sodium se situe dans une plage allant de 1:2 à 1:6, de préférence est de 1:3,6.

8. Composition de sable coloré contenant une multiplicité de grains de sable quartzeux à enrobages externes à base de pigments colorés, **caractérisée en ce que** les grains de sable quartzeux comportent des couches superficielles fixées par cuisson, à base d'un mélange d'enrobage qui contient une solution d'hydroxyde de sodium et de l'eau en un rapport préétabli, de l'acide borique à une concentration préétablie ainsi que de l'orthosilicate de sodium.

9. Composition de sable coloré selon la revendication 8, **caractérisée en ce que** le rapport de la solution d'hydroxyde de sodium à l'eau est choisi dans une plage de 1:1 à 1:5, de préférence est de 1:2, la solution d'hydroxyde de sodium et l'eau formant une solution diluée d'hydroxyde de sodium.

10. Composition de sable coloré selon la revendication 9, **caractérisée en ce que** l'acide borique et la solution diluée d'hydroxyde de sodium sont mélangés en un rapport choisi dans une plage allant de 1:1 à 1:5, de préférence en un rapport de 1:1,8, pour donner une solution d'acide borique-solution d'hydroxyde de sodium.

11. Composition de sable coloré selon la revendication 10, **caractérisée en ce que** la solution d'acide borique-solution d'hydroxyde de sodium et l'orthosilicate de sodium sont mélangés en un rapport choisi dans une plage allant de 1:1 à 1:6, de préférence en un rapport de 1:3,6, pour donner le mélange d'enrobage.

12. Composition de sable coloré selon l'une quelconque des revendications 8 à 11, **caractérisée en ce que** l'orthosilicate de sodium a une teneur en SiO₂ de 27,3 % en masse, une teneur en Na₂O de 8,2 % en masse et une teneur en H₂O de 64,5 % en masse.
